# EUROPÄISCHE PATENTSCHRIFT

(11) **EP 1 550 519 B1**
(45) Veröffentlichungstag und Bekanntmachung des Hinweises auf die Patenterteilung: **02.08.2006**
(21) Anmeldenummer: 04090498.9
(22) Anmeldetag: 21.12.2004
(51) Int. Cl.: B09C 1/00

(54) **Verfahren und Vorrichtung zur In-situ-Reinigung kontaminierter Grundwasserströme**
Process and apparatus for in-situ remediation of contaminated underground flowing water
Procédé et installation permettant la décontamination in-situ d'écoulements souterrains d'eau contaminée

(30) Priorität: 05.01.2004 DE 102004001802
(43) Veröffentlichungstag der Anmeldung: 06.07.2005
(73) Patentinhaber: Berliner Wasserbetriebe Anstalt des öffentlichen Rechts, 10179 Berlin (DE)
(72) Erfinder: Ehbrecht, Hartmut, Dipl.-Ing., 13051 Berlin (DE); Giese, Ronald, Dr., 01217 Dresden (DE); Luckner, Ludwig, Prof.-Dr., 01217 Dresden (DE); Engelmann, Frank Ingolf, Dr., 16833 Fehrbellin (DE); Roscher, Carola, Dipl.-Ing., 12459 Berlin (DE)

(56) Entgegenhaltungen:
- WO-A-00/45970
- WO-A-00/63127
- US-B1- 6 210 073
- US-B1- 6 224 770

## Beschreibung

Die Erfindung betrifft ein Verfahren zur In-situ-Reinigung kontaminierter Grundwasserströme durch Gaseintrag im Bereich von Kontaminationsfahnen zur Ausbildung eines Durchflussreaktors und eine Vorrichtung zur Durchführung des Verfahrens.

Zur Reinigung von Grundwasserströmen ist es erforderlich, im Grundwasser gelöste und mit dem Grundwasser transportierte Kontaminanten zu entfernen. Weit verbreitete Reinigungstechnologien bestehen darin, kontaminiertes Grundwasser zu Tage zu fördern, über Tage aufzubereiten und anschließend wieder zu infiltrieren. Das setzt jedoch große Zeiträume voraus, wenn die Kontaminationsfahnen fortlaufend nachgespeist werden. Dies ist beispielsweise dann der Fall, wenn der Kontaminant in den Eintragsquellen fest gebunden vorliegt und seine Freisetzung ins Grundwasser nur mit kleinen Raten erfolgt. In der Regel wird deshalb eine Reinigung der Feststoffmatrix im Quellbereich angestrebt, die durch Einlösung von Oxidationsmitteln intensiviert werden kann. Zum Abbau organischer Kontaminanten wie beispielsweise Mineralöle, chlorierte Kohlenwasserstoffe, aromatische und polyzyklische aromatische Kohlenwasserstoffe oder zur Transformation anorganischer Stoffe wie Ammonium, Sulfid, Eisen und Mangan werden Oxidationsmittel eingesetzt.

Eine gezielte Reinigung von Grundwasserströmen wird auch mit Hilfe von unterirdischen Bauwerken in Form von reaktiven Reinigungswänden erreicht. Sie werden an die Spitze von Kontaminationsfahnen positioniert und bestehen aus einem Grundwasserleitsystem und einem technogenen Durchflussreaktor (Teutsch, G.; Schüth, C.; Melzer, R. (1999): Reaktive Wände. Stand der Technik, Planung, Implementierung, In: Altlastenforum Baden Württemberg e. V., Stuttgart).

Die Ausführung von Leitwänden und Reaktor im Grundwasserbereich ist bautechnisch anspruchsvoll und kostenintensiv. Bei diesem Verfahren wird der Grundwasserleiter nicht als Reaktor genutzt.

Eine Nutzung des Grundwasserleiters als Reaktorraum zur Sanierung einer Kontamination durch Injektion eines tensidhaltigen Fluids wird in EP 0780 166 A1 beschrieben. Diesem werden Mikroorganismen zur Zersetzung der Kontaminanten zugesetzt und Gas eingelöst. Das durch Druckinjektion eingelöste Gas wird erst im Untergrund freigesetzt. Der Nachteil des Verfahrens besteht in der geringen Reichweite der Gasausbreitung infolge Ausgasung nach Flüssiginjektion und in der Verdrängung des kontaminierten Grundwassers durch die Injektionsflüssigkeit. Auch wird die natürliche Heterogenität der gas-/hydrogeologischen Strömungspfade nicht gezielt erkundet und ausgenutzt. Das Verfahren eignet sich deshalb nicht zum Ausbau von heterogenen Durchflussreaktoren für die Behandlung großer Grundwasser-Strömungsquerschnitte.

Bekannt ist allgemein auch, dass die Beladung einer Flüssigkeit mit einem gasförmigen Stoff von dessen Partialdruck in der Gasphase, der Temperatur, dem Stoffübergangskoeffizienten, der spezifischen Austauschfläche und der Differenz zwischen Gleichgewichtsbeladung und der bereits vorhandenen Beladung der Flüssigkeit abhängig ist. Unter den Bedingungen eines Aquifers spielen zudem die Größenordnung der Gaseinspeicherung in der porösen Feststoffmatrix, der Transport und die heterogene Verteilung eine bedeutende Rolle für die Beladung.

In WO 00/63127 ist ein Verfahren beschrieben, bei dem sauerstoffhaltiges Gas durch Impulsinjektion mit mindestens 0,35 bar über dem hydrostatischen Druck durch Lanzen direkt in einen kontaminierten Grundwasserkörper injiziert wird. Zur Unterstützung des mikrobiellen Abbaus der Kontaminanten werden zusätzlich mikrobiologische Kulturen eingetragen. Mit dem Impulsinjektionsverfahren wird eine Grundwasserzone mit Injektionselementen von geringer horizontaler Reichweite, typisch < 6 m, und geringer Teufe, typisch < 6 m, relativ homogen mit residualen Gasbläschen belegt.
Ein minimaler Volumengehalt an Sauerstoff-Normgas von 10 Vol.-% des beeinflussten Raumes wird unabhängig von den Zielprozessen in-situ und der konkreten Zusammensetzung des injizierten Gasgemisches je nach Injektionsintervall in den Aquifer eingetragen. Nachteilig ist die damit verbundene befristete hohe Gasbelastung des beeinflussten Raumes, die mit einer befristeten Reduzierung der hydraulischen Durchlässigkeit der Behandlungszone verbunden ist. Zur Initiierung und kurzzeitigen Unterstützung des mikrobiellen Abbaus der Kontaminanten in-situ werden zusätzlich nicht an das Insitu-Milieu angepasste mikrobiologische Mischkulturen mit hohem Masseanteil > 0,1 Masse-% in einer Flüssigkeit dispergiert über Infiltrationsbrunnen oder Gräben infiltriert bzw. unter hohem Druck über offene Infiltrationslanzen mit > 0,7 bar über dem Porenwasserdruck eingepresst. Die eingetragenen Mikroorganismen und reaktiven Gase werden räumlich-zeitlich unterschiedlich mit nur geringer Reichweite im Aquifer verteilt. Das Verfahren zielt auf die Behandlung und Eliminierung von organischen Kontaminanten im Aquifer, nicht jedoch auf die Nutzung der autochthonen Mikroorganismen und ihre Entwicklung zu einer leistungsfähigen In-situ-Biozönose ab.

Nach WO 00/45970 sind ein Verfahren und eine Vorrichtung bekannt, wo mit einem passiven, durch Windenergie gesteuerten Gasnachladungssystem Druckluft bis zu einem vorher eingestellten Vordruck erzeugt wird, die dann über ein Austrittsventil impulsförmig über Lanzen in poröse Medien eintritt. Durch die Luft werden der mikrobielle Abbau befördert, die Verflüchtigung organischer Kontaminanten bewirkt und chemische Fällungsprozesse durch Oxidation ausgelöst. Wie auch in WO 00/63127 beschrieben, weisen die Gaseintragselemente den Nachteil auf, dass sie nur unzureichend gegenüber der anstehenden porösen Feststoffmatrix des Grundwasserleiters abgedichtet sind, was Gasverluste durch Aufstieg zur Erdoberfläche zur Folge hat, die Gaseinspeicherung und die Reichweite der Gasausbreitung reduziert und den gezielten Aufbau eines Durchflussreaktors erschwert.

Des Weiteren ist eine Vorrichtung zur Mehrfachbegasung eines Aquifers aus US 6,210,073 B1 als Multi-level-airfluid-transfer-system bekannt, bei dem in einem Bohrloch mehrere Vorrichtungen zur Injektion von Gasen, Flüssigkeiten und Gas-in-Flüssigkeit-Dispersionen sowie zur Flüssigkeitsprobenahme in mehreren Teufen eingerichtet werden. Zwischen den Eintragshorizonten sind Abdichtungen angebracht, die vorrangig dem Anschluss der Vorrichtung an bindige Schichten im Untergrund dienen.

Die Vorrichtung orientiert sich in hohem Maße an der Technologie zum Ausbau von Multilevel-Messstellen. In Bezug auf Gasinjektionen in einem überwiegend sandigen Profil hat das Multi-level-airfluid-transfer-system den Nachteil, dass die durch Bohrverfahren unvermeidlichen Auflockerungszonen durch die Abdichtungsmaßnahmen nicht ausreichend beseitigt werden können. Das Verfahren beinhaltet nicht die Erkundung und gezielte Ausnutzung gas-/hydrogeologischer heterogener Untergrundstrukturen in grundwasserdurchlässigen Aquiferbereichen für die Behandlung von Grundwasser-Kontaminationsfahnen mit reaktiven Gasen.

Nach US 5,133,625 sind ein Verfahren und eine Vorrichtung bekannt, mit der aus einem On-site-Mischfluid-Tank über eine Multilevel-Injektionslanze für einen gewünschten biologischen In-situ-Stoffabbau adaptierte Mikroorganismen dispergiert in einer Flüssigphase mit Überdruck gleichzeitig in mehrere Teufen eines kontaminierten Untergrundes injiziert werden. Nachfolgend erfolgt die Steuerung der optimalen Milieubedingungen und des Nährstoffangebots für diese Mikroorganismen mittels periodischer Nachinjektion flüssiger oder gasförmiger Stoffe über dieselbe Lanze.
Dieses Verfahren ist zur Sanierung kleinräumiger Kontaminantionsquellen im Untergrund mit zerstörter oder nicht aktivierbarer In-situ-Biozönose und vorrangig am Feststoff angelagerten oder in einer separierten, immobilen, nichtwässrigen Flüssigphase befindlichen Kontaminanten geeignet, nicht jedoch zur Behandlung großräumiger und vergleichsweise gering belasteter Abstromfahnen kontaminierten Grundwassers.
Die Vorrichtung kann nicht zum Aufbau eines raumwirksamen heterogenen Durchflussreaktors in einer porösen Feststoffmatrix mit raumgreifender Verteilung von reaktiven Gasen eingesetzt werden.

Nach US 4,442,895 und US 5,032,042 sind eine Vorrichtung und ein Verfahren zur Gas- und Flüssigkeitsinjektion mit hohem Überdruck in geringdurchlässige Untergrundbereiche der gesättigten und ungesättigten Bodenzone bekannt. Beide Verfahren beruhen auf der technischen Erzeugung von Bruch-, Riss- und Kluftzonen mit erhöhter Wasser- und Gasdurchlässigkeit, über die in den Folgeschritten der Verfahren Reaktanten in die geringdurchlässigen kontaminierten Bereiche eingetragen werden können. Diese Verfahren zielen nicht auf die Ausnutzung der natürlichen Aquifer-Heterogenität zur Behandlung kontaminierter Grundwasserleiter ab, sondern auf die Erschließung kontaminierter, hydraulisch unzugänglicher Untergrundbereiche, um diese Kontaminationsquellen in Grundwasserstauerschichten oder in nicht durchströmten Linsen einer Insitu-Behandlung zugänglich zu machen.

Aufgabe der Erfindung ist es, ein Verfahren und eine Vorrichtung anzugeben, die eine kostengünstige und schnelle In-situ-Reinigung und Überwachung eines kontaminierten Grundwasserstromes ermöglicht.

Erfindungsgemäß wird die Aufgabe dadurch gelöst, dass ein Gasgemisch über Injektionslanzen direkt in die vom kontaminierten Grundwasser durchströmte poröse Feststoffmatrix eingetragen und entlang heterogener, separater gas-/hydrogeologischer Strömungspfade verteilt wird.
Durch die Direktgasinjektionen werden in-situ eine reaktive Wand und ein reaktiver Abstrom als in Reihe geschaltete Festbettreaktoren entsprechend den gas-/hydrogeologischen Standortverhältnissen zur Behandlung großer Grundwasserströmungsquerschnitte, beispielsweise Aquiferteufen > 10 m, typisch > 30 m, mit wenigen Gasinjektionselementen und einer horizontalen Reichweite je Gasinjektionselement > 10 m, typisch > 20 m, aufgebaut und betrieben. Das Festbett in Form der Feststoffmatrix des Grundwasserleiters wird in die Reinigung einbezogen. Die reaktive Gaswand stellt ein lang gestrecktes Element mit einer bestimmten Dicke quer zur Grundwasserströmung dar. In der Gaswand werden nicht gelöste Gase gespeichert, verteilt, eingelöst und primäre Stoffwandlungen durchgeführt.
Zur gezielten Beeinflussung der Grundwasserbeschaffenheit kommen als Bestandteil des Gasgemisches eine Reihe reaktiver Gase wie beispielsweise O₂, CO₂, H₂, CH₄, NH₃ in Frage, wobei sie entweder die Rolle von Donatoren oder Akzeptoren von Elektronen oder Protonen erfüllen oder zur Zellsynthese bestimmt sind.

Über ein Gasversorgungs- und Steuerungssystem werden der Injektionsdruck gemessen und der Volumenstrom für den Gastransport gesteuert.
Das Gasgemisch liegt in dem zu behandelnden Grundwasserleiter sowohl kohärent in zusammenhängenden Gas-Porenkanalnetzwerken als auch inkohärent verteilt als mobile oder kapillar immobilisierte Bubbles vor. Die Gasausbreitung im Porenraum des Grundwasserleiters erfolgt mit einer eigenen, von der Grundwasserbewegung weitestgehend unabhängigen Dynamik der hoch mobilen, kohärenten Transportmechanismen im Gas-Porenkanalnetzwerk und der großräumigeren, inkohärenten Ausbreitungsprozessen der Bubbles mit dem strömenden Grundwasser.

Nach der Gaseinlösung ins Grundwasser werden die reaktiven Gase durch die initiierten Stoffwandlungsprozesse aufgebraucht, wobei die relativ langsame Fließgeschwindigkeit des Grundwassers vorteilhaft für mikrobielle Prozesse, Säure/Base-Reaktionen oder Redoxprozesse mit langsamer Kinetik ist.
Die Nachspeisung von reaktivem Gas erfolgt in Abhängigkeit vom Verbrauch der gasförmigen Reaktanten im Untergrund sowohl durch kontinuierliche oder diskontinuierliche Injektionen als auch durch Regelung der Dosiermenge reaktiver Gase in einem Trägergasstrom.
Zum Transport der reaktiven Gase und zur Erzielung einer möglichst weiträumigen Ausdehnung wird Luft als Trägergas eingesetzt. Die erforderlichen reaktiven Gase werden für die erstrebten Prozessabläufe in den Trägergasstrom bedarfsgerecht zudosiert.

Airstripping-Effekte und Ausgasungen aus dem Aquifer in die ungesättigte Bodenzone werden durch Beschränkung der Injektionsraten auf max. 2,0 Nm³/h je Lanze und der Drücke auf max. 0,15 bar über dem Porenwasserdruck bei Begasungstiefen von 50 m unter Gelände weitestgehend unterbunden.
Die Injektionsteufen werden unter Berücksichtigung des Kontaminationszustandes des Grundwassers nach gas-/hydrogeologischen Gesichtspunkten festgelegt. In einer Vorerkundung zur Untergrundheterogenität werden mittels Drucksondierungstechnologie die geologischen Lagerungsverhältnisse und Durchlässigkeitsbeiwerte über Messungen von Spitzendruck und Mantelreibung in-situ bestimmt. Auf Grundlage dieser Daten werden in einer gas-/hydrogeologischen Schematisierung Gasanreicherungszonen und Gasaufstiegsbarrieren für das injizierte Gas abgeleitet. Hierauf basierend wird die reaktive Gaswand gezielt aufgebaut.

Im Bedarfsfall werden Menge und Raumverteilung des Gases im In-situ-Durchflussreaktor durch eine Direktinjektion von Gas-Tensid-Schäumen oder durch Vorinjektion einer tensidhaltigen Flüssigkeit unmittelbar vor der Gasinjektion erhöht. Hierbei werden die Anzahl der vom Gasinjektionspunkt ausgehenden Gasströmungskanäle, ihre Verzweigung und die Ausdehnung lokaler Kissengasbereiche im ungestörten Aquifer gesteigert. Die Gastransportgeschwindigkeit im Aquifer reduziert sich beim Transport von Gas-Tensid-Schaumbläschen, gleichzeitig muss ein höherer Transportwiderstand im Aquifer durch erhöhte Injektionsdrücke, max. 0,5 bar über dem Porenwasserdruck, überwunden werden. Es werden vollständig in-situ abbaubare Tenside der Lebensmitteltechnologie eingesetzt.
Weiterhin können bei Bedarf in die Gaswand weitere Reaktanten in fester und flüssiger Form schnell und großräumig verteilt eingebracht werden. Diese festen oder flüssigen Reaktanten werden in der Tensidlösung dispergiert, während der Erzeugung von Gas-Tensid-Schäumen in die Gas-Tensid-Grenzflächen eingelagert und gemeinsam mit den nicht benetzten Gas-Tensid-Schaumbläschen in der porösen Feststoffmatrix transportiert, verteilt und immobilisiert. Hierdurch wird Sorge dafür getragen, dass alle zum Stoffumsatz in-situ erforderlichen Reaktanten zeitgleich an den Ort der Dekontamination im Aquifer gelangen und dort in hinreichender Menge über eine hinreichende Zeitdauer zur Verfügung stehen.
Die Einlagerung fester und flüssiger Reaktanten in die Gas-Tensid-Grenzflächen der nicht benetzten Gas-Tensid-Schaumbläschen bewirkt eine Abschirmung dieser Reaktanten gegenüber Wechselwirkungen mit der Feststoffmatrix während des Transports zum Ort der Dekontamination sowie eine zeitliche Verzögerung der Gas- und Reaktanten-Freisetzung am Ort der Dekontamination infolge einer niedrigen Stofftransferkinetik Gas→Wasser durch die Tensid-manipulierten Grenzflächen.
Der reaktive Abstrombereich der Gaswand zeichnet sich dadurch aus, dass er nur im Grundwasser gelöstes Gas enthält und hier sekundäre Stoffwandlungen im Sinne einer Nachreinigung ablaufen. Die Länge des reaktiven Abstrombereiches wird durch eine bedarfsgerechte Gasdosierung in der Gaswand bestimmt.
Die erfindungsgemäße Vorrichtung besteht darin, dass eine kleinkalibrige Gasinjektionslanze, angeschlossen an ein Gasversorgungs- und Steuerungssystem, unterirdisch in einem Sondierungskanal gekoppelt mit einer Messstelle zur Stoffmenge erhaltenden Probenahme installiert und in definierten Abständen zusätzlich mit dem Aquifer durch Verpressung von Dichtmassen fest verbunden wird.
Die erfindungsgemäße Vorrichtung wird im Bereich von zuvor gas-/hydrogeologisch erkundeten Gasanreicherungszonen installiert.
Die Gasinjektionslanze und die Messstelle werden gemeinsam in das Sondierungshohlgestänge eines Sondierungsloches eingebaut und mit einer verlorenen Sondierungsspitze verbunden.
Durch statische oder dynamische Kraftübertragung auf das Sondierungshohlgestänge wird die verlorene Sondierungsspitze mit der Ausbaugarnitur auf den Injektionshorizont abgeteuft.

Durch Zurückziehen des unten offenen Sondierungshohlgestänges bildet sich unmittelbar über der verlorenen Sondierungsspitze im Filterbereich der Gasinjektionslanze und der Messstelle eine Auflockerungszone. Bei der Gasinjektion wird dadurch die Ausbildung eines Gaskissens in dieser Zone gefördert, von dem aus die Formierung der Gasströmungskanäle in die ungestörte Feststoffmatrix über eine größere Kontaktoberfläche erfolgt. Die Anzahl der von diesem Gaskissen ausgehenden Gasaustrittskanäle wird durch eine Tensid-Flüssig-Injektion vor der eigentlichen Gasinjektion oder eine Gas-Tensid-Schaum-Injektion erhöht.
Beim weiteren Zurückziehen des Sondierungshohlgestänges wird der Ringraum zwischen der Ausbaugarnitur und dem anstehenden Gebirge mit einer gasundurchlässigen Dichtungsmasse abgedichtet.
Zusätzlich werden mit Bezug auf die gas-/hydrogeologische Vorerkundung ausgewählte Horizonte mit gasundurchlässiger Dichtmasse über das unten offene Sondierungshohlgestänge verpresst, um so horizontale Gasaufstiegsbarrieren zur Verhinderung unerwünschter Gasverluste zu schaffen.

Die Gasinjektionslanze selbst besteht aus einem kleinkalibrigen, druckfesten Schlauch, der über einen Zapfen an einer verlorenen Sondierungsspitze befestigt ist. Unmittelbar über dem Zapfen ist die Gasinjektionslanze als Gasaustrittsfilter gestaltet.
Die mit der Gasinjektionslanze gekoppelte Messstelle besteht aus einem Vollrohr und einem durch ein Septum nach oben hin verschlossenen Filter. Das Grundwasser wird somit hier unter In-situ-Druckbedingungen beprobt.

### Die Erfindung soll nachstehend an einem Ausführungsbeispiel näher erläutert werden:

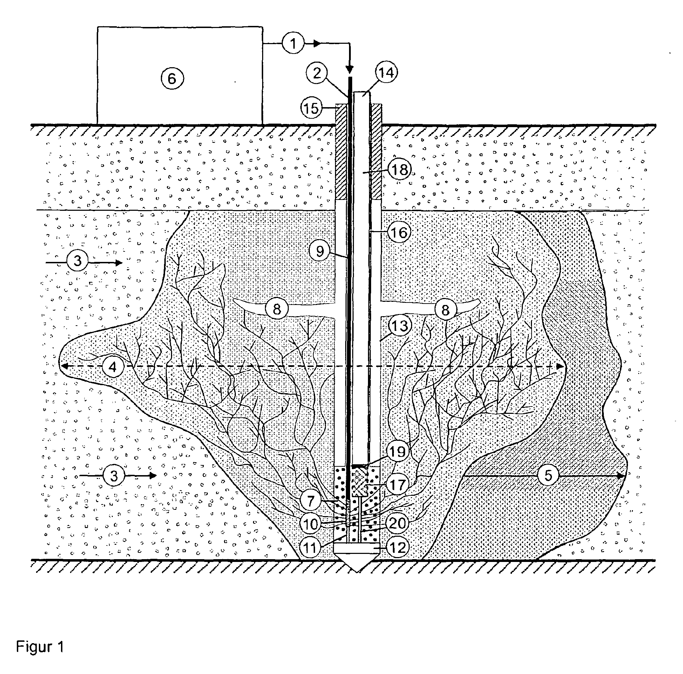

In Figur 1 ist dargestellt, wie ein Gasgemisch 1 über eine Injektionslanze 2 direkt in die poröse Feststoffmatrix eines kontaminierten Grundwasserstromes 3 eingetragen und entlang heterogener, separater gas-/hydrogeologischer Strömungskanäle verteilt wird.
Durch diese Direkt-Gasinjektion wird in-situ ein Durchfluss-Reinigungsreaktor aufgebaut, der aus zwei in Reihe geschalteten Festbettreaktoren, als reaktive Gaswand 4 und reaktiver Abstrom 5 ausgebildet, besteht.

In der reaktiven Gaswand 4 mit einer bestimmten, in Strömungsrichtung formierten Wanddicke und einer Länge quer zur Grundwasserströmung werden Gase gezielt eingetragen, nicht gelöst verteilt und gespeichert. Nach der Einlösung der reaktiver Gase in das Grundwasser wird in der reaktiven Gaswand 4 eine primäre Stoffwandlung erzielt. Im Abstrom der reaktiven Gaswand 4 werden die in das Grundwasser eingelösten reaktiven Gase durch sekundäre Stoffwandlungsprozesse bestimmungsgemäß aufgebraucht. Die örtliche Ausdehnung des reaktiven Abstroms 5 wird hierdurch so gering wie nötig gehalten. Zum Transport der reaktiven Gase und zur Erzielung ihrer möglichst weiten Ausbreitung und Verteilung im Untergrund wird Luft als Träger des Gasgemisches eingesetzt. Die dem Trägergas Luft zuzumischenden reaktiven Gase werden bedarfsbestimmt dosiert, die Injektionsdrücke werden gemessen und der Gasvolumenstrom gesteuert und geregelt.
Hierzu dient ein Gasversorgungs- und Steuerungssystem 6, das beispielsweise aus Gastanks, Kompressoren, druckfesten Gasleitungen, Gasreinigungsfiltern, Gasvolumenstrommessern, Gasdrucksensoren und weiterer Mess-, Steuer- und Regelungstechnik besteht. Die verwendeten Gase werden mit hinreichendem Vordruck, > 2 bar über dem höchsten erforderlichen Injektionsgasdruck, an das Gasversorgungs- und Steuerungssystem 6 übergeben und nach Reinigung über parallel geschaltete Gastransportkanäle den Gasinjektionslanzen zugeführt. Die Zusammensetzung des Gasgemisches für eine Gasinjektionslanze 2 wird durch die individuelle Kopplung der parallel geschalteten Gastransportkanäle variabel gehalten.

Die Bereitstellung der gasförmigen Reaktanten im Untergrund erfolgt verbrauchsabhängig sowohl durch kontinuierliche oder diskontinuierliche Injektionen als auch durch Regelung der Dosiermenge reaktiver Gase im Trägergasstrom.
In Abhängigkeit von den Stoffmerkmalen der Kontaminantion werden mit einer gas/hydrogeologischen Schematisierung für jede Gasinjektionslanze 2 sowohl die Lage der Gasanreicherungszonen 7 und als auch die Anordnung der Gasaufstiegsbarrieren 8 abgeleitet. Somit können sowohl die reaktive Gaswand 4 gezielt aufgebaut als auch die räumliche Ausdehnung des reaktiven Abstroms 5 in Grundwasserströmungsrichtung begrenzt werden.
Die Gasinjektionslanze 2 besteht aus einem kleinkalibrigen, druckfesten Schlauch 9, der oben mit einem Gasversorgungs- und Steuerungssystem 6 verbunden ist und unten als Gasaustrittsfilter 10 ausgebildet ist und der über einen Zapfen 11 an einer verlorenen Sondierungsspitze 12 befestigt ist.

Die flexible, kleinkalibrige Gasinjektionslanze 2 wird unterirdisch in einem Sondierungskanal 13 gekoppelt mit einer Messstelle 14 installiert. Hierzu werden die Gasinjektionslanze 2 und die Messstelle 14 gemeinsam mit Hilfe eines Sondierungshohlgestänges 15, das in Figur 1 in weitgehend gezogenem Zustand dargestellt ist, in einen Sondierungskanal 13 eingebaut. In definierten Teufenbereichen werden diese Einbauten zusätzlich mit dem Aquifer durch Verpressen von Dichtmassen durch statische oder dynamische Kraftübertragung auf das Sondierungshohlgestänge 15 wird die verlorene Sondierungsspitze 12 mit der Einbaugarnitur auf den Injektionshorizont abgeteuft. Dabei kommt es über das gesamte Sondierungsprofil zu einer vorteilhaften Verdichtung des anstehenden Gebirges im unmittelbaren Umfeld infolge der Feststoffverdrängung. Durch Zurückziehen des unten offenen Sondierungshohlgestänges 15 entsteht unmittelbar über der verlorenen Sondierungsspitze 12 ein Auflockerungsbereich, dessen Querschnitt dem des Sondierungskanals 13 entspricht. Dieser Auflockerungsbereich wird bestimmungsgemäß zu einer Gasanreicherungszone 7. Hier sind der Gasaustrittsfilter 10 der Gasinjektionslanze 2 zur Ausbildung eines Gaskissens und der Grundwasserfilter 17 der Messstelle 14 installiert.
Bei der Gasinjektion können sich so durch die Ausbildung eines Gaskissens um den Gasaustrittsfilter 10 die Gasaustrittskanäle in die Feststoffmatrix des Untergrundes über eine größere Kontaktoberfläche entwickeln. Die Anzahl der Gasaustrittskanäle kann durch eine Tensid-Flüssig-Injektion vor der eigentlichen Gasinjektionen zusätzlich erhöht werden.
Bei dieser Tensid-Flüssig-Injektion wird aus einem Tensidlösungs- und Vorlagebehälter die Tensidlösung unmittelbar vor der Direktgasinjektion, somit grundsätzlich diskontinuierlich, in den druckfesten Schlauch 9 der Gasinjektionslanze 2 eingetragen und eine Schaumgenerierung im Untergrund bewirkt. Andererseits kann auch oberirdisch zunächst ein Gas-Tensid-Schaum erzeugt und dieser über die Gasinjektionslanze 2 in den Untergrund injiziert werden. Eine solche Gas-Tensid-Schauminjektion wird anwendungsbezogen in der Regel auch diskontinuierlich erfolgen.

Beim weiteren Zurückziehen des Sondierungshohlgestänges 15 kann der Ringraum zwischen der Ausbaugarnitur und dem ungestörten Gebirge mit einer gasundurchlässigen Dichtungsmasse 16 abgedichtet werden. Zusätzlich werden mit Bezug auf die gas/hydrogeologische Vorerkundung ausgewählte Horizonte mit gasundurchlässiger Dichtmasse 16 über das unten offene Sondierungshohlgestänge 15 verpresst, um so Gasaufstiegsbarrieren 8 zur Verhinderung unerwünschter Gasverluste zu schaffen.
Die Messstelle 14 zur Stoffmenge erhaltenden Probenahme besteht aus einem Vollrohr 18 und einem durch ein Septum 19 nach oben hin verschlossenen Filter 17 und ist über eine Distanzstange 20 mit der verlorenen Sondierungsspitze 12 verbunden.
Das Grundwasser kann aus dem Filter 17 unter In-situ-Druckbedingungen beprobt werden, da einerseits die Grundwasserprobenahme mit Stoffmenge erhaltender Headspace-Technik ermöglicht wird, andererseits können Messstellen-integrierte Durchflusszellen (MIDZ) mit Sensoren, beispielsweise zur In-situ-Messung gelöster Gase, eingesetzt werden.
Das Verfahrensprinzip zur In-situ-Bestimmung besteht darin, dass an das Septum 19 über eine Hohlnadel eine Durchflusszelle mit fest eingebautem Messsensor angedockt wird. Nach dem Andockvorgang und dem Durchstechen des Septums 19 strömt Grundwasser mit hinreichender Strömungsgeschwindigkeit kontinuierlich den Messsensor an, verlässt die MIDZ am oberen Ende über eine Öffnung in das Vollrohr 18 und wird aus diesem abgepumpt.

### Aufstellung der verwendeten Bezeichnungen zur Patentanmeldung "Verfahren und Vorrichtung zur In-situ-Reinigung kontaminierter Grundwasserströme"

- 1: Gasgemisch
- 2: Gasinjektionslanze
- 3: kontaminierter Grundwasserstrom
- 4: reaktive Gaswand
- 5: reaktiver Abstrom
- 6: Gasversorgungs- und Steuerungssystem
- 7: Gasanreicherungszone
- 8: Gasaufstiegsbarriere
- 9: druckfester Schlauch
- 10: Gasaustrittsfilter
- 11: Zapfen
- 12: verlorene Sondierungsspitze
- 13: Sondierungskanal
- 14: Messstelle
- 15: Sondierungshohlgestänge
- 16: gasundurchlässige Dichtungsmasse
- 17: Grundwasserfilter
- 18: Vollrohr
- 19: Septum
- 20: Distanzstange

## Patentansprüche

1. Verfahren zur In-situ-Reinigung kontaminierter Grundwasserströme durch Eintrag von reaktiven Gasen in einem Gasgemisch (1) über Injektionslanzen (2) direkt in die poröse Feststoffmatrix eines kontaminierten Grundwasserstromes (3) und Verteilung entlang heterogener, separater gas-/hydrogeologischer Strömungskanäle,
**dadurch gekennzeichnet, dass**
durch die Direktgasinjektion mit wenigen Gasinjektionselementen in-situ eine reaktive Gaswand (4) und ein reaktiver Abstrom (5) als in Reihe geschaltete Durchflussreaktoren aufgebaut und betrieben werden.

2. Verfahren nach dem Anspruch 1,
**dadurch gekennzeichnet, dass**
eine reaktive Gaswand (4) derart ausgebildet wird, dass entsprechend den gas-/hydrogeologischen Standortverhältnissen ein Gasgemisch gezielt in die durchströmte poröse Feststoffmatrix eingetragen, nicht gelöst verteilt und gespeichert sowie mit der Einlösung reaktiver Gase in das Grundwasser eine primäre Stoffwandlung im Bereich der reaktiven Gaswand (4) durchgeführt wird.

3. Verfahren nach den Ansprüchen 1 und 2,
**dadurch gekennzeichnet, dass**
im Abstrom der reaktiven Gaswand (4) die in das Grundwasser eingelösten reaktiven Gase durch sekundäre Stoffwandlungsprozesse bestimmungsgemäß aufgebraucht werden und damit der reaktive Abstrom (5) in Grundwasserströmungsrichtung so kurz wie nötig gehalten wird.

4. Verfahren nach den Ansprüchen 1 bis 3,
**dadurch gekennzeichnet, dass**
der Eintrag des Gasgemisches und seine Zusammensetzung über ein Gasversorgungs- und Steuerungssystem (6) volumenstromabhängig gesteuert wird.

5. Verfahren nach dem Anspruch 1 bis 4,
**dadurch gekennzeichnet, dass**
zum Eintrag und zur Verteilung der reaktiven Gase Luft als Träger des Gasgemisches (1) eingesetzt wird.

6. Verfahren nach den Ansprüchen 1 bis 5,
**dadurch gekennzeichnet, dass**
zur Minimierung von Ausgasungen aus dem Grundwasser mit im Vergleich zum Porenwasserdruck sehr geringem Überdruck gearbeitet wird.

7. Verfahren nach den Ansprüchen 1 bis 6,
**dadurch gekennzeichnet, dass**
die Menge und die Verteilung des in der porösen Feststoffmatrix der reaktiven Gaswand (4) gespeicherten Gasgemisches durch den Einsatz von Tensid-Schäumen beeinflusst wird.

8. Vorrichtung zur Durchführung des Verfahrens nach den Ansprüchen 1 bis 7,
**dadurch gekennzeichnet, dass**
unterirdisch in einem Sondierungskanal eine kleinkalibrige flexible Gasinjektionslanze (2) mit einer Messstelle (14) gekoppelt über einer verlorenen Sondierungsspitze (12) installiert ist.

9. Vorrichtung nach dem Anspruch 8,
**dadurch gekennzeichnet, dass**
die Gasinjektionslanze (2) aus einem druckfesten Schlauch (9), der oben mit einem Gasversorgungs- und Steuerungssystem (6) verbunden und unten als kleiner Gasaustrittsfilter (10) ausgebildet ist, besteht.

10. Vorrichtung nach den Ansprüchen 8 und 9
**dadurch gekennzeichnet, dass**
die Messstelle (14) aus einem Vollrohr (18) und einem durch ein Septum (19) nach oben hin verschlossenen Filter (17) besteht.

11. Vorrichtung nach den Ansprüchen 8 bis 10,
**dadurch gekennzeichnet, dass**
der kleinkalibrige, druckfeste Schlauch (9) der Injektionslanze (2) und das Vollrohr (18) der Messstelle (14) in definierten Abständen fest mit der porösen Feststoffmatrix des kontaminierten Grundwasserstromes (3) verbunden sind.

## Claims

1. Method for in-situ clarification of contaminated groundwater flows by intake of reactive gases in a gas mixture (1) by way of injection lances (2) directly into the porous solid material matrix of a contaminated groundwater flow (3) and distribution along heterogeneous, separate gasgeological/hydrogeological flow channels, **characterised in that** through direct gas injection with few gas injection elements in situ a reactive gas wall (4) and a reactive outflow (5) are built up and operated as throughflow reactors connected in series.

2. Method according to claim 1, **characterised in that** a reactive gas wall (4) is constructed in such a manner that in correspondence with the gasgeological/hydrogeological local conditions a gas mixture is selectively inducted into the porous solid material matrix flowed through and is distributed and stored without being dissolved, and a primary substance conversion in the region of the reactive gas wall (4) is carried out by the dissolution of reactive gas into the groundwater.

3. Method according to claims 1 and 2, **characterised in that** the reactive gases dissolved into the groundwater are consumed in accordance as intended by secondary substance conversion processes in the outflow of the reactive gas wall (4) and thus the reactive outflow (5) in the groundwater flow direction is kept as short as necessary.

4. Method according to claims 1 to 3, **characterised in that** the intake of the gas mixture and its composition are controlled in dependence on volume flow by way of a gas supply and control system (6).

5. Method according to claims 1 to 4, **characterised in that**, air is used as carrier of the gas mixture (1) for the intake and distribution of the reactive gases.

6. Method according to claims 1 to 5, **characterised in that** for minimisation of outgassings from the groundwater, operation is with very low excess pressure by comparison with interstitial water pressure.

7. Method according to claims 1 to 6, **characterised in that** the quantity and distribution of the gas mixture stored in the porous solid material matrix of the reactive gas wall (4) is influenced by the use of surfactant foams.

8. Device for carrying out the method according to claims 1 to 7, **characterised in that** a small-calibre flexible gas injection lance (2) coupled with a measuring point (14) is installed in a probe channel by way of a lost probe tip (12).

9. Device according to claim 8, **characterised in that** the gas injection lance (2) consists of a pressure-resistant hose (9) which is connected at the top with a gas supply and control system (6) and constructed at the bottom as a small gas outlet filter (10).

10. Device according to claims 8 and 9, **characterised in that** the measuring point (14) consists of a solid tube (18) and a filter (17) closed towards the top by a septum (19).

11. Device according to claims 8 to 10, **characterised in that** the small-calibre, pressure-resistant hose (9) of the injection lance (2) and the solid tube (18) of the measuring point (14) are fixedly connected at defined intervals with the porous solid material matrix of the contaminated groundwater flow (3).

## Revendications

1. Procédé de nettoyage in situ de courants de nappes souterraines contaminés par introduction de gaz réactifs dans un mélange de gaz (1) via des lances d'injection (2) directement dans la matrice poreuse de matières solides d'un courant de nappe phréatique contaminé (3) et par distribution le long de canaux d'écoulement gazo-/hydrogéologiques hétérogènes séparés,
**caractérisé en ce que**
grâce à l'injection directe de gaz avec peu d'éléments d'injection de gaz in situ on établit et on exploite une paroi de gaz (4) réactive et un rejet réactif (5) en forme de réacteurs à passage montés en série.

2. Procédé selon la revendication 1,
**caractérisé en ce qu'**
on forme une paroi de gaz (4) pour qu'en fonction de la situation gazo-/hydrogéologique un mélange de gaz pénètre de façon ciblée dans la matrice poreuse de matières solides traversée, soit distribué sans être dissout et accumulé, et grâce à l'introduction directe de gaz réactifs dans la nappe phréatique, on effectue une transformation primaire de matières dans la zone de la paroi de gaz réactive (4).

3. Procédé selon les revendications 1 et 2,
**caractérisé en ce que**
dans le rejet de la paroi de gaz réactive (4) les gaz réactifs introduits directement dans la nappe phréatique sont consommés selon leur destination par des processus de transformation secondaires de matières, et le rejet (5) réactif dans la direction de l'écoulement de la nappe phréatique est ainsi aussi court que nécessaire.

4. Procédé selon les revendications 1 à 3,
**caractérisé en ce que**
l'introduction du mélange de gaz et la composition de celui-ci sont commandées en fonction du flux volumique à l'aide d'un système d'alimentation en gaz et de commande (6).

5. Procédé selon les revendications 1 à 4,
**caractérisé en ce que**
pour l'introduction et la distribution des gaz réactifs on utilise de l'air comme porteur du mélange de gaz (1).

6. Procédé selon les revendications 1 à 5,
**caractérisé en ce que**
pour minimiser des émanations de gaz de la nappe phréatique, on travaille avec une très faible surpression par rapport à la pression intersticielle.

7. Procédé selon les revendications 1 à 6,
**caractérisé en ce que**
la quantité et la distribution du mélange de gaz accumulé dans la matrice poreuse de matières solides de la paroi de gaz réactive (4) sont influencées par des mousses tensioactives.

8. Dispositif pour la mise en oeuvre du procédé selon les revendications 1 à 7,
**caractérisé en ce que**
sous la terre, dans un canal de sondage, une lance d'injection de gaz flexible de petit calibre (2) couplée à un point de mesure (14) est installée au-dessus d'une pointe de sondage perdue (12).

9. Dispositif selon la revendication 8,
**caractérisé en ce que**
la lance d'injection de gaz (2) comprend un tuyau flexible (9) résistant à la pression, relié à un système d'alimentation en gaz et de commande (6), et dont la partie inférieure forme un petit filtre d'échappement de gaz (10).

10. Dispositif selon les revendications 8 et 9,
**caractérisé en ce que**
le point de mesure (14) comprend un tube plein (18) et un filtre (17) fermé vers le haut par un septum (19).

11. Dispositif selon les revendications 8 à 10,
**caractérisé en ce que**
le tuyau flexible de petit calibre résistant à la pression (9) de la lance d'injection (2) et le tube plein du point de mesure (14) sont reliés de manière fixe à des distances définies à la matrice poreuse de matières solides du courant de nappe phréatique contaminé (3).
